Europäisches Patentamt

European Patent Office

Office européen des brevets

(11) Veröffentlichungsnummer: **0 072 563**
**B1**

# (12) EUROPÄISCHE PATENTSCHRIFT

(45) Veröffentlichungstag der Patentschrift:
07.01.87

(51) Int. Cl.⁴: **G 06 K  15/10**

(21) Anmeldenummer: **82107450.7**

(22) Anmeldetag: **16.08.82**

(54) Verfahren zur Reduzierung der Redundanz von binären Zeichenfolgen für Matrixdruckverfahren.

(30) Priorität: **19.08.81  DE 3132842**

(43) Veröffentlichungstag der Anmeldung:
**23.02.83 Patentblatt 83/8**

(45) Bekanntmachung des Hinweises auf die Patenterteilung:
**07.01.87 Patentblatt 87/2**

(84) Benannte Vertragsstaaten:
**FR GB IT NL SE**

(56) Entgegenhaltungen:
**DE - A - 2 042 143**
**DE - B - 2 748 289**
**US - A - 4 146 874**
**US - A - 4 205 309**

(73) Patentinhaber: **Siemens Aktiengesellschaft Berlin und München, Wittelsbacherplatz 2, D-8000 München 2 (DE)**

(72) Erfinder: **Kuntze, Rudolf, Bahnhofstrasse 22, D-8156 Otterfing (DE)**

### Beschreibung

Die Erfindung betrifft ein Verfahren gemäss dem Oberbegriff des Patentanspruchs 1.

Bei der punktweisen Darstellung von alphanumerischen Zeichen oder von grafischen Mustern mittels eines Matrixdruckverfahrens werden die Zeichen oder die Muster durch eine mehr oder weniger grosse Anzahl von Einzelpunkten im Raster einer Zeichenmatrix dargestellt. Für das Matrixdruckverfahren werden als Druckköpfe Nadeldruckköpfe oder Tintendruckköpfe verwendet. Im ersten Falle sind die Druckelemente durch Drucknadeln realisiert, die über geeignete Antriebselemente, wie beispielsweise Tauchankermagnetsysteme, gegen den Aufzeichnungsträger gestossen werden, und dort den Abdruck einzelner Punkte bewirken. Beim Tintendruckverfahren werden aus den Düsen eines Tintendruckkopfes unter der Einwirkung piezokeramischer Antriebselemente einzelne Tintentröpfchen auf den Aufzeichnungsträger gespritzt und bilden dort die Punkte des darzustellenden Zeichens. Die Schriftqualität der Zeichen hängt in sehr erheblichem Masse von der Auflösung ab. Diese ist bestimmt durch die Anzahl der Einzelpunkte je Zeichen, d. h. durch die Anzahl der Zeilen und Spalten der Zeichenmatrix. Bei einem Mosaikdruckverfahren bestimmen beispielsweise die Anzahl der Druckernadeln oder die Anzahl der Tintendüsen die Anzahl der Zeilen des Zeichenrasters. Durch eine relative Bewegung zwischen Druckkopf und dem Aufzeichnungsträger jeweils um einen festgelegten Abstand, sind die Spalten der Zeichenmatrix bestimmt. Ein Druckelement kann nach einer Betätigung frühestens nach einem bestimmten Zeitraum erneut betätigt werden, der als Schritt oder als Druckschritt bezeichnet wird. Wenn der mit den Druckelementen versehene Mosaikdruckkopf zwischen zwei Betätigungen von Druckelementen um einen ganzen Druckschritt bewegt wird, so wird nur eine geringe Auflösung erreicht. Es ist bekannt (DE-PS 27 48 289, VPA 77/2410), die Druckelemente eines Mosaikdruckkopfes zwischen zwei Betätigungen der Druckelemente jeweils um Teilschrittlängen zu bewegen, um damit die Auflösung zu verbessern.

Die Informationen zur Ansteuerung der einzelnen punkterzeugenden Druckelemente werden entsprechend einem abzudruckenden Zeichen einem Zeichengenerator in Form von binären Zeichenmuster, den sogenannten binären Zeichenfolgen, entnommen, und in einer, den Druckelementen zugeordneten Druckersteuerung in Ansteuerimpulse für die Druckelemente umgesetzt. Eine Erhöhung der Auflösung, die wie erwähnt, durch eine grössere Anzahl von Rasterpunkten innerhalb des Zeichenrasters erreicht wird, erfordert eine beträchtliche Zeichenkapazität für den Zeichengenerator und führt zu relativ langen Verarbeitungszeiten. Beispielsweise ist für ein Zeichenraster, das 28 Zeilen und 102 Spalten aufweist, also 2856 Bildpunkte enthält, für den Abdruck von 256 unterschiedlichen Zeichen eine Speicherkapazität von 731 K-Bit erforderlich. Bei einer Druckgeschwindigkeit von 200 Zeichen pro Sekunde bedeutet das einen Zeichendurchsatz von 71,4 K-Byte pro Sekunde, woraus sich eine Verarbeitungszeit von 14,00 µsec pro Byte ergibt. Zur zeitgerechten Verarbeitung solcher Datenmengen sind herkömmliche Mikroprozessoren nicht geeignet.

Für die Darstellung von Zeichen auf einer Kathodenstrahlröhre ist es bekannt (US-PS 4 205 309), zur Führung und zur Einstellung der Intensität des Elektronenstrahls eine Redundanz vermindernde Kodierung zu verwenden. Dabei werden die Linienzüge des Elektronenstrahl jeweils durch Positionen zwischen definierten adressierten Punkten festgelegt. Dieses Verfahren ist jedoch für Matrixdrucker nicht ohne weiteres anwendbar, da hier eine Vielzahl von Abdruckvorgängen im Raster, das für die Zeichendarstellung vorgesehen ist, stattfinden muss.

Der Erfindung liegt die Aufgabe zugrunde, die zur Ansteuerung von Druckelementen in einem Matrixdruckwerk erforderlichen Zeicheninformationen zu reduzieren, ohne die mit einer Erhöhung der Rasterpunkte verbundenen Verbesserungen des Schriftbildes zu beeinträchtigen. Die Erfindung geht dazu von dem Gedanken aus, dass für die Darstellung von alphanumerischen Zeichen nur ein Teil der insgesamt vorhandenen Rasterpunkte einer Zeichenmatrix erforderlich ist. Die der Erfindung zugrunde liegende Aufgabe wird durch die im kennzeichnenden Teil des Patentanspruches 1 angegebenen Merkmale gelöst.

Weitere Ausgestaltungen des erfindungsgemässen Verfahrens sind in den abhängigen Ansprüchen gekennzeichnet.

Mit der Erfindung ist im wesentlichen der Vorteil verbunden, dass die bei einer grossen Anzahl von im normalen Schreibbetrieb vorkommenden Zeichen zusammenhängenden Linienzüge bei Verfolgung des erfindungsgemässen Verfahrens durch die Angabe von Differenzkoordinaten mit einer erheblichen Reduzierung des Informationsaufwandes dargestellt werden können. Durch die Angabe der Unterschiede der Koordinaten zwischen einzelnen Punkten der Zeichenmatrix in einem Codewort kann eine Reduzierung der Information auf unter 10% des bisher erforderlichen Aufwandes erreicht werden. Damit wird auch die Bearbeitungszeit um den gleichen Faktor reduziert. Durch die Möglichkeit, in einem Codewort auch eine Information über die Multiplikation einer im gleichen oder in einem zugeordneten Codewort angegebenen Änderung nach Betrag und Richtung aufzunehmen, kann bei mehreren, aufeinanderfolgenden Teilschritten die Angabe einer entsprechenden Anzahl von solchen Schrittinformationen eingespart werden.

Eine weitere Einsparung ergibt sich dadurch, dass ein Codewort anstelle der Schrittinformation nach Betrag und Richtung eine sogenannte Sprunginformation mit Angaben nach Betrag und Richtung enthält. Damit können zwei Bildpunkte, die weit entfernt voneinander in der Zeichenmatrix zum Abdruck kommen sollen, durch nur zwei Codewörter beschrieben werden. Dadurch kann eine häufige Wiederholung einzelner Schrittinformationen entfallen.

Schliesslich ist mit dem erfindungsgemässen Differenzkoordinatenverfahren auch die Darstellung in der sogenannten Proportionalschrift und/oder in der sogenannten Schattenschrift möglich.

Die Erfindung wird im folgenden anhand der Zeichnungen erläutert. Dort zeigen

Fig. 1 ein Ausführungsbeispiel in Form eines Blockschaltbildes,

Fig. 2 ein Beispiel für die Anordnung einzelner Druckelemente in einem Druckkopf sowie für eine Zeichenmatrix,

Fig. 3 in Form einer Tabelle die für ein bestimmtes Zeichen vorgesehenen Codewörter und

Fig. 4 die Darstellung eines Zeichens in einem Zeichenraster nach der Erfindung.

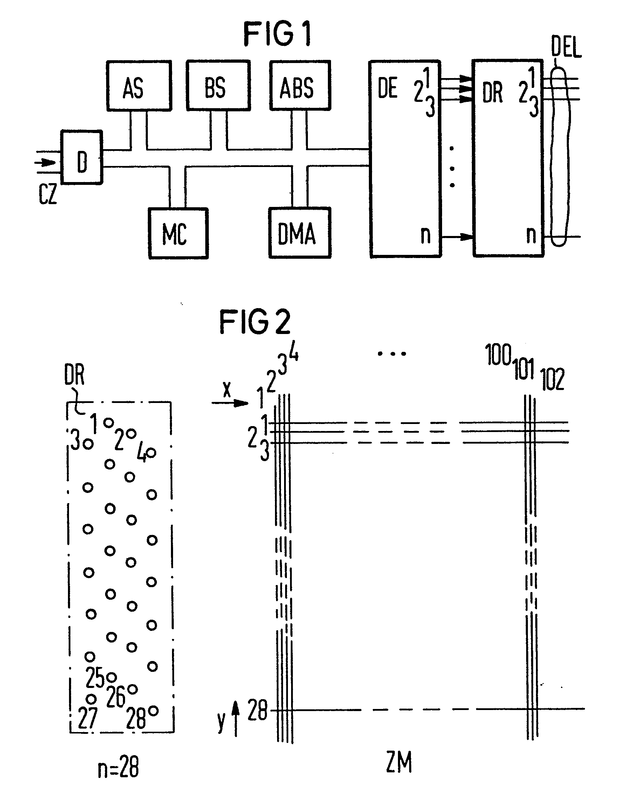

Im Ausführungsbeispiel nach Fig. 1 treffen von einer hier nicht dargestellten Einrichtung, die beispielsweise über eine Eingabetastatur oder über einen Zeichenempfänger gesteuert werden kann, die einem gewünschten Zeichen entsprechenden codierten Informationen ein. Jedem Zeichen ist in einem Bildpunktspeicher BS, der Teil des Zeichengenerators ist, eine binäre Zeichenfolge zugeordnet. Die Anfangsadresse dieser Speicherplätze im Bildpunktspeicher BS sind in einem Adressenspeicher AS enthalten. Sowohl der Bildpunktspeicher BS als auch der Adressenspeicher AS sind zweckmässigerweise als ROM realisiert: Die einem Zeichen zugeordneten binären Zeichenfolgen werden in einem Abbildungsspeicher ABS eingetragen und von dort durch Abfrage der Druckerelektronik DE in diese übernommen. Das kann z.B. über einen DMA-Kanal geschehen, wozu bedarfsweise ein an sich bekannter sogenannter direct access memory-Baustein vorgesehen ist. Die im Abbildungsspeicher ABS aufgrund der übernommenen Informationen gebildeten Steuerkriterien führen zur Betätigung der Druckelemente DEL, beispielsweise zur Ansteuerung von n Tintenkanälen eines Tintendruckkopfes DR. Die Anordnung wird über einen Mikroprozessor MC gesteuert. Die Anzahl n der Druckelemente DEL stellt dabei die Anzahl der Zeilen des Zeichenrasters in der Zeichenmatrix dar, in welchem die Zeichen dargestellt werden. Im folgenden werden die Zeilen als y-Koordinaten des Zeichenrasters bezeichnet. Die Anzahl der Spalten des Zeichenrasters in der Zeichenmatrix, die im folgenden als x-Koordinate bezeichnet werden, ist durch die Breite des Zeichenfeldes einerseits und durch die Teilschrittlänge der Druckkopfbewegung andererseits bestimmt.

Figur 2 zeigt ein Beispiel für die Anordnung von n = 28 Druckelementen DEL eines Druckkopfes DR und deren mögliche Anordnung am Druckkopf sowie ein Beispiel für eine Zeichenmatrix ZM mit 102 Spalten. Die Zeichenmatrix ZM dieses Beispieles enthält demnach 2856 Bildpunkte.

Zur Reduzierung der Redundanz für die zur Darstellung von Zeichen erforderlichen binären Zeichenfolgen enthält der Bildpunktspeicher BS für jeden Bildpunkt der Zeichenmatrix ZM eine Information über die Richtung der Lageänderung eines Bildpunktes und über den Betrag der Richtungsänderung. Diese Information stellt ein Codewort dar und wird als Schrittbyte bezeichnet. Ein solches Schrittbyte hat dabei folgenden Aufbau:

| $\pm$ | y | M1 | M0 | $\pm$ | x2 | x1 | x0 |
|---|---|---|---|---|---|---|---|

In jeweils einem Bit ist die Richtung ($+$ oder $-$) einer Änderung, bezogen auf einen definierten Anfangspunkt im Zeichenraster, angegeben; in einem Bit y ist der Betrag der Richtungsänderung in der y-Richtung und in 3 Bit x0, x1 und x2 ist der Betrag der Richtungsänderung in der x-Richtung angegeben, wobei im ersten Fall ein Zeilenabstand und im zweiten Fall ein Spaltenabstand eine Einheit darstellt. Ausgehend von der vorher eingenommenen Lage kann die Einstellung eines Druckelementes demnach in positiver oder in negativer Richtung in y-Richtung um jeweils 0 oder einen Zeilenabstand und/oder in x-Richtung um maximal 7 Spaltenabstände (0 bis 8) verändert werden. In zwei Multiplikationsbits M0 und M1 kann ein Multiplikationsfaktor mit Werten von 1 bis 4 codiert sein, durch den sowohl in y- als auch in x-Richtung eine Vervielfachung der angegebenen Abstände bewirkt wird.

Für sehr lange geradlinige Schriftzüge, für die auch ein durch die Multiplikationsbits in einem Schrittbyte angegebene Vervielfachung der x- und y-Schritte nicht ausreicht, ist es zweckmässig, ein besonderes Multiplikationsbyte M als weiteres Codewort einzuführen, das stets einem Schrittbyte zugeordnet ist, diesem beispielsweise vorangestellt ist, und das angibt, wie oft die im zugeordneten Schrittbyte enthaltene Koordinatenänderung vervielfältigt wird. Ein Multiplikationsbyte M hat folgenden Aufbau:

| 1 | 0 | 0 | M4 | M3 | M2 | M1 | M0 |
|---|---|---|---|---|---|---|---|

$\leftarrow$ M $\rightarrow$

Es ist durch eine besondere Bitkombination, beispielsweise durch die Bitkombination 100, als Multiplikationsbyte M gekennzeichnet, und lässt eine Vervielfachung bis zu einem Faktor 32 zu.

Anstelle eines Schrittbytes S kann, falls die darin enthaltenen, maximal möglichen Koordinatenschritte nicht ausreichen, für die x- und für die y-Richtung ein Sprungbyte SP vorgesehen sein, das folgenden Aufbau hat:

SP

SPY | 1 | 0 | 1 | y4 | y3 | y2 | y1 | y0 |
|---|---|---|---|---|---|---|---|
SP

SPX | $\pm$ | x6 | x5 | x4 | x3 | x2 | x1 | x0 |
|---|---|---|---|---|---|---|---|

Das Sprungbyte besteht aus zwei Codewörtern, nämlich einem Codewort SPX für die x- und einem Codewort SPY für die y-Richtung, die stets zusammengehören. Sie werden durch eine ansonsten nicht vorkommende Bitfolge, beispielsweise durch die Bitfolge 101 im ersten Codewort SPY, gekennzeichnet und enthalten Informationen, die es ermöglichen, die Druckelemente mit nur zwei Codewörtern derart zu steuern, dass Bildpunkte auch an weit voneinander entfernten Stellen der Zeichenmatrix ZM dargestellt werden können. Es kann zweckmässig sein, die Differenzkoordinaten für eine Änderung in der einen oder in beiden Richtungen als absoluten Betragswert anzugeben, wenn damit eine eindeutige Aussage erreicht ist. Im Ausführungsbeispiel ist das für die y-Richtung vorgesehen worden.

Wenn für die Darstellung eines Zeichens nicht die gesamte Breite der Zeichenmatrix ausgenützt wird, z.B. bei der Proportionalschrift, so ist es zweckmässig, eine besondere Information über die Zeichenbreite vorzusehen. In der binären Zeichenfolge ist dazu ein Endbyte E vorgesehen, das in einem Codewort EX für die x-Richtung und in einem zweiten Codewort EY für die y-Richtung die Druckeinrichtung auf die für den Beginn eines nächsten Zeichens vorgesehene Lage steuert. Das Endbyte E stellt eine besondere Form des Sprungbytes dar, und hat folgenden Aufbau:

$$y = n$$

| E | EY | 1 | 0 | 1 | 1 | 1 | 1 | 1 | 1 |
|---|----|---|---|---|---|---|---|---|---|
|   |    |   | ← SP → |  |  |  |  |  |  |
|   | EX | + | x6 | x5 | x4 | x3 | x2 | x1 | x0 |

In den ersten 3 Bit des Endbytes EY ist es als ein Sprungbyte und durch die für das Zeichenende festgelegte Zeileninformation, im Beispiel die Information für die Zeile $Y = 32$, ist es als Endbyte gekennzeichnet. Damit ist es in besonders vorteilhafter Weise möglich, Zeichen in der sogenannten Proportionalschrift darzustellen, für die die Angabe der Zeichenbreite erforderlich ist. Ein solches Endbyte führt lediglich zu einer Druckkopfbewegung, ohne dass ein Abdruck durch ein Druckelement ausgelöst wird.

In Ausgestaltung der Erfindung kann auf ein Endbyte verzichtet werden und stattdessen im ersten Byte der im Bildpunktspeicher enthaltenen binären Zeichenfolge eine Information über die Zeichenbreite mit aufgenommen werden.

Wenn das Verfahren auch für einen Druckvorgang in Rückwärtsrichtung (Drucken von rechts nach links) Anwendung finden soll, können bei der Auswertung der Codewörter für Sprung- bzw. Endbytes Mehrdeutigkeiten auftreten. Um das zu vermeiden, wird im Rahmen der Erfindung vorgeschlagen, im zweiten Codewort SPX bzw. EX eines Sprung- bzw. eines Endbytes ein Unterscheidungskriterium vorzusehen, das eine eindeutige Auswertung ermöglicht. Erreicht wird das dadurch, dass die Information im zweiten Codewort SPX bzw. EX über die Sprungweite eingeschränkt und die dadurch frei gewordene Stelle mit einer 0 belegt wird. Die erwähnte Einschränkung bedeutet, dass anstelle der vorher möglichen maximalen Sprungweite von $\pm 2^7 = \pm 128$ Schritten die maximale Sprungweite dann $\pm 2^6 = \pm 64$ Schritte beträgt.

Zur Darstellung in der sogenannten Schattenschrift, bei der neben einem Bildpunkt in einem vorgegebenen Abstand ein zweiter sogenannten Schattenpunkt auftritt, können die dazu erforderlichen Informationen durch normale Schrittbytes S angegeben werden. Es können aber gemäss einer Ausgestaltung der Erfindung auch weitere, als Umschaltebytes U bezeichnete Codewörter vorgesehen sein, die den Abdruck eines Schattenpunktes im Abstand von z.B. 4 Spalten in der x-Richtung rechts neben einem normalen Bildpunkt steuern. Diese Codewörter haben folgenden Aufbau:

| U | U1 | 1 | 1 | 0 | 1 | 1 | 0 | 0 | 0 |
|---|----|---|---|---|---|---|---|---|---|
|   | U2 | 1 | 1 | 0 | 0 | 1 | 0 | 0 | 0 |

Das erste Codewort U1 enthält neben der Instruktion, dass ab diesem Zeitpunkt alle folgenden Bildpunkte einen oder mehrere Schattenpunkte erhalten sollen, weiter noch die Information über den Abstand des oder der Schattenpunkte vom ursprünglichen Bildpunkt. Das zweite Codewort U2 enthält die Information für die Druckersteuerung über das Ende dieser Prozedur.

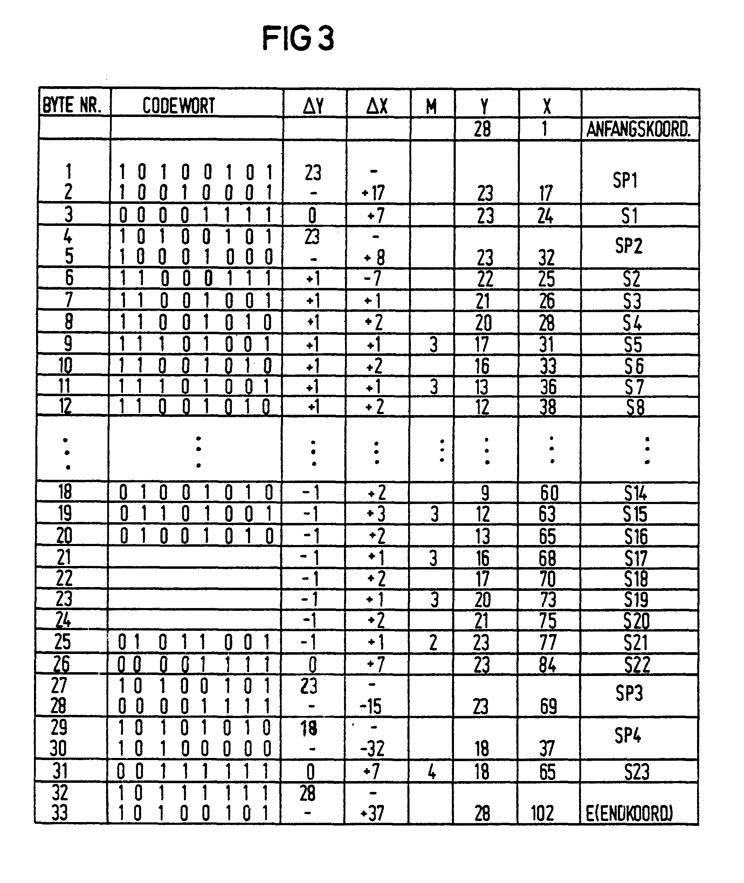

Bei Verfolgung des erfindungsgemässen Verfahrens ist für die Darstellung jedes Zeichens eine gegenüber herkömmlichen Verfahren erheblich reduzierte Informationsmenge erforderlich. Als Beispiel sind in Fig. 3 die zur Darstellung des Zeichens «A» erforderlichen Codewörter in Form einer Tabelle teilweise aufgeführt. Diese Tabelle enthält in Spalte 1 die Bytenummer, in Spalte 2 eine das Codewort darstellende Bitkombination, in den Spalten 3 und 4 die Werte für eine Koordinatenänderung nach Betrag und Richtung, in Spalte 5 den Multiplikationsfaktor M und in den Spalten 6 und 7 die endgültige X- und Y-Koordinate im Zeichenraster nach Durchführung der Koordinatenänderung. In einer letzten Spalte sind die Codewörter jeweils mit einem Hinweis auf ein Schrittbyte S, ein Sprungbyte SP oder ein Endbyte E gekennzeichnet. Insgesamt sind zur Darstellung des Zeichens «A» 33 Byte ausreichend.

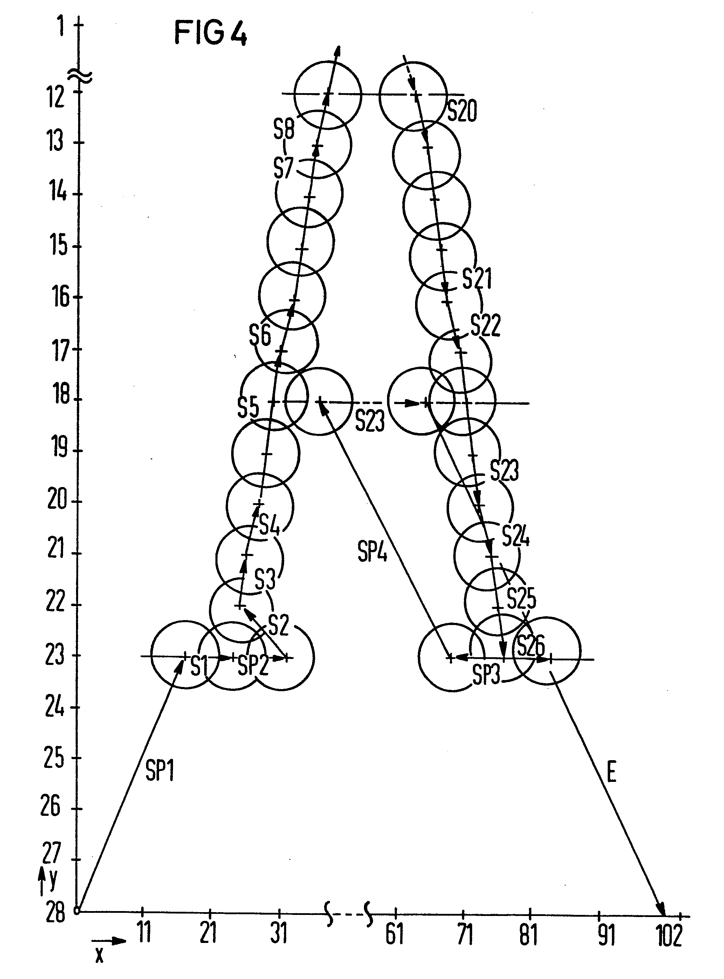

Die Zeichenbildung wird unter Bezugnahme auf die in Fig. 3 dargestellte Tabelle nunmehr anhand von Fig. 4 veranschaulicht. Dort ist ein aus $Y = 28$ Zeilen und $X = 102$ Spalten bestehendes Zeichenraster dargestellt. Als definierter Ausgangspunkt im Zeichenraster ist die Koordinate $X = 1$, $Y = 28$ und als definierter Endpunkt im Zeichenraster sind die Koordinaten $X = 102$, $Y = 28$ definiert. Mit den zwei Bytes umfassenden Sprungbyte SP1 sind die auf den Ausgangspunkt bezogenen Differenzkoordinaten festgelegt, die einen Abdruck im Zeichenraster an der Koordinate $X = 17$ und $Y = 23$ bewirken. Daran schliesst sich ein erstes Schrittbyte S1 an, dem ein Sprungbyte SP2 folgt. Dieses Sprungbyte könnte auch durch ein Schrittbyte ersetzt sein, wenn die Differenzkoordinaten zwischen dem vorhergehenden Punkt und dem neuen Druckpunkt 7 Spaltenschritte wäre. Mit den folgenden Schrittbytes S2, S3 und S4 werden jeweils die nächsten Druckpunkte bestimmt. Das folgende Schrittbyte S5 ist durch die Angabe einer Differenzkoordinate sowohl in X- als auch in Y-Richtung jeweils um eine Spalten- bzw. eine Zeilenbreite gekennzeichnet, die, da in diesem Falle die Multiplikationsbits M0 und M1 entsprechend gesetzt sind, verdreifacht wird. Das führt zu drei aufeinanderfolgenden Druckpunkten im Zeichenraster. In ähnlicher Weise werden durch die Schrittbytes S6 bis S26 die einzelnen Druckpunkte im Zeichenraster bestimmt. Zur Darstellung des für das Zeichen «A» erforderlichen Querstriches sind die beiden Sprungbytes SP3 und SP4 vorgesehen, denen sich ein Schrittbyte S23 anschliesst, das durch die entsprechend gesetzten Multiplikationsbits vervierfacht ist. Schliesslich endet die Codewortfolge zur Darstellung des Zeichens «A» mit dem Endbyte E, durch das ohne Abdruck die definierte Endstelle im Zeichenraster erreicht wird.

Es liegt im Rahmen der Erfindung, die zur Darstellung von Differenzkoordinaten vorgesehenen Codewörter in einem grösseren Masse als in dem Ausführungsbeispiel angegeben mit Multiplikationsfaktoren zu versehen. Auf diese Weise wird eine weitere Reduzierung des Informationsaufwandes erreicht, wobei allenfalls ein geringfügiger Qualitätsverlust bei der Darstellung des Zeichens auftreten kann.

**Patentansprüche**

1. Verfahren zur Reduzierung der Redundanz von Zeichen oder grafische Muster beschreibenden binären Zeichenfolgen im Bildpunktspeicher eines Matrixdruckers, dessen Druckkopf mehrere Druckelemente aufweist und die Zeichen durch Punkte in einer Zeichenmatrix dargestellt werden, dadurch gekennzeichnet, dass die zur Darstellung der Bildpunkte in der Zeichenmatrix (ZM) im Bildpunktspeicher (BS) enthaltene binäre Zeichenfolge (CW) in Form von Differenzkoordinaten ($\Delta$x, $\Delta$y) aufeinanderfolgender Bildpunkte gespeichert sind, wobei die Differenzkoordinaten ($\Delta$x, $\Delta$y) einer binären Zeichenfolge (CW) Informationen für eine schrittweise (S) und/oder eine sprungweise (SP) Einstellung der Druckelemente (DEL) nach Richtung und Betrag einer Koordinatenänderung in der Zeichenmatrix (ZM) enthalten, dass die Information (S) für eine schrittweise Einstellung der Druckelemente (DEL) in einem Codewort für beide Koordinaten (X, Y) der Zeichenmatrix (ZM) nach Richtung und Betrag und die Information (SP) für eine sprungweise Einstellung der Druckelemente (DEL) für beide Koordinaten (x, y) der Zeichenmatrix (ZM) getrennt in zwei aufeinanderfolgenden Codewörtern (SPX, SPY) gespeichert ist und dass die Informationen (S, SP) von einer Druckerelektronik (DE) zur Einstellung der Druckelemente (DEL) ausgewertet werden.

2. Verfahren nach Anspruch 1, dadurch gekennzeichnet, dass in der Information (S) für eine schrittweise Einstellung der Druckelemente (DEL) ein Kriterium (M0, M1) vorgesehen ist, das in der Druckerelektronik (DE) zur mehrmaligen Durchführung aufeinanderfolgender schrittweiser Koordinatenänderungen bewertet wird.

3. Verfahren nach Anspruch 1, dadurch gekennzeichnet, dass eine einer Information (S) für eine schrittweise Einstellung der Druckelemente (DEL) zugeordnete zweite Information (M) vorgesehen ist, die in einem Codewort Angaben für die Druckerelektronik (DE) zur mehrmaligen Durchführung aufeinanderfolgender schrittweiser Koordinatenänderungen enthält.

4. Verfahren nach Anspruch 1, dadurch gekennzeichnet, dass eine einer Information (S) für eine schrittweise Einstellung der Druckelemente (DEL) zugeordnete, mindestens zwei Codewörter aufweisende dritte Information (U) vorgesehen ist, wobei das erste Codewort (U1) in der Druckerelektronik (DE) zur Durchführung einer weiteren, in der einen Koordinate (X) der Zeichenmatrix (ZM) um eine bestimmte Differenzkoordinate (z.B. $\Delta$X = +4) verschobenen Einstellung der Druckerelemente (DEL) und das zweite Codewort (U2) zur Beendigung der verschobenen Einstellung ausgewertet wird.

5. Verfahren nach Anspruch 1, dadurch gekennzeichnet, dass in der Information für eine sprungweise Einstellung der Druckelemente (DEL) in zwei aufeinanderfolgenden Codewörtern (E1, E2) die das darzustellende Zeichen beendende Information (E) gespeichert ist, und dass bei einer Einstellung der Druckelemente (DEL) in diesem Fall ein Zeichenabdruck unterbleibt.

6. Verfahren nach Anspruch 5, dadurch gekennzeichnet, dass die Kennzeichnung der Information für eine sprungweise (SP) und für eine beendende (E) Einstellung der Druckelemente (DEL) jeweils im ersten Codewort (SPY, EY) in Form einer bestimmten Bitkombination (101) enthalten ist.

7. Verfahren nach Anspruch 5 und 6, dadurch gekennzeichnet, dass die Kennzeichnung der Information für eine sprungweise (SP) und für eine beendende (E) Einstellung der Druckelemente (DEL) jeweils im ersten (SPY, EY) und im zweiten Codewort (SPX, EX) in Form einer bestimmten Bitkombination (101 in SPY, EY) und eines bestimmten Bit (0 in SPY, EX) enthalten ist, und dass in diesem Fall die Sprungweite in der durch das zweite Codewort (SPX, EX) bestimmten Richtung eingeschränkt ist.

**Claims**

1. A method for reducing the redundancy of binary character sequences, which describe characters or graphic patterns, in the image dot store of a matrix printer, whose printing head has a plurality of printing elements and the characters are represented by dots in a character matrix, characterised in that the binary character sequence (CW), which is contained in the image dot store (BS) in order to represent the image dots in the character matrix (ZM) is stored in the form of difference coordinates ($\Delta$x, $\Delta$y) of consecutive image dots, where the difference coordinates ($\Delta$x, $\Delta$y) of a binary character sequence (CW) comprise items of information for a gradual (S) and/or intermittent (SP) adjustment of the printing elements (DEL) in accordance with direction and value of a coordinate alteration in the character matrix (ZM),

that the information (S) for a gradual adjustment of the printing elements (DEL) is stored in a code word for both coordinates (X, Y) of the character matrix (ZM) in accordance with direction and value and the information (SP) for an intermittent adjustment of the printing elements (DEL) for both coordinates (x, y) of the character matrix (ZM) is stored in two consecutive code words (SPX, SPY), and that the information (S, SP) is analysed by a printer electronics unit (DE) for adjusting the printing elements (DEL).

2. A method as claimed in claim 1, characterised in that in the information (S) for a gradual adjustment of the printing elements (DEL) is arranged a criterion (M0, M1) which in the printer electronics unit (DE) is evaluated for repeatedly carrying out consecutive gradual coordinate changes.

3. A method as claimed in claim 1, characterised in that there is provided a second item of information (M) which is assigned to an item of information (S) for a gradual adjustment of the printing elements (DEL), and which in a code word comprises specifications for the printer electronics unit (DE) for repeatedly carrying out consecutive gradual coordinate changes.

4. A method as claimed in claim 1, characterised in that there is provided a third item of information (U) which comprises at least two code words and is assigned to an item of information (S) for a gradual adjustment of the printing elements (DEL), where the first code word (U1) is evaluated for carrying out a further adjustment of the printing elements (DEL) which is displaced in the one coordinate (X) of the character matrix (ZM) by a specific difference coordinate (e.g. $\Delta X = +4$) and the second code word (U2) is evaluated for terminating the displaced adjustment.

5. A method as claimed in claim 1, characterised in that the information (E) terminating the character which is to be represented is stored in the information for an intermittent adjustment of the printing elements (DEL) in two consecutive code words (E1, E2), and that in the event of an adjustment of the printing elements (DEL) a character print is not effected.

6. A method as claimed in claim 5, characterised in that the characterisation of the information for an intermittent (SP) and for a terminating (E) adjustment of the printing elements (DEL) is respectively included in the first code word (SPY, EY) in the form of a specific bit combination (101).

7. A method as claimed in claims 5 and 6, characterised in that the characterisation of the information for an intermittent (SP) and for a terminating (E) adjustment of the printing elements (DEL) is respectively included in the first (SPY, EY) and in the second code word (SPX, EX) in the form of a specific bit combination (101 in SPY, EY) and a specific bit (0 in SPY, EX), and that in this case the shift width in the direction which is determined by the second code word (SPX, EX) is restricted.

**Revendications**

1. Procédé pour réduire la redondance de suites de chiffres binaires, décrivant des caractères ou des dessins graphiques, dans la mémoire de points d'image d'une imprimante matricielle dont la tête d'impression présente plusieurs éléments d'impression, et dans laquelle les caractères sont représentés par des points dans une matrice à caractères, caractérisé en ce que les suites de chiffres binaires (CW), contenues dans la mémoire de points d'image (BS), pour la représentation des points d'image dans la matrice à caractères (ZM), sont mémorisées sous forme de coordonnées différentielles ($\Delta$x, $\Delta$y) de points d'image successifs, les coordonnées différentielles ($\Delta$x, $\Delta$y) d'une suite de chiffres binaires (CW) contenant des informations pour un réglage pas à pas (S) et/ou par saut (SP) des éléments d'impression, en direction et grandeur, d'un changement de coordonnées dans la matrice à caractères (ZM), que l'information (S) pour un réglage pas à pas des éléments d'impression (DEL) est mémorisée en un mot code pour les deux coordonnées (X, Y) de la matrice à caractères (ZM), en direction et grandeur, et l'information (SP) pour un réglage par saut des éléments d'impression (DEL) est mémorisée séparément pour les deux coordonnées (x, y) de la matrice à caractères (ZM) en deux mots code successifs (SPX, SPY) et que les informations (S, SP) sont interprétées, en vue du réglage des éléments d'impression (DEL), par une électronique (DE) de l'imprimante.

2. Procédé selon la revendication 1, caractérisé en ce que l'information (S) pour un réglage pas à pas des éléments d'impression (DEL) contient un critère (M0, M1) qui est interprété dans l'électronique (DE) de l'imprimante en vue de l'exécution, à plusieurs reprises, de changements de coordonnées, pas à pas, que se suivent.

3. Procédé selon la revendication 1, caractérisé en ce que l'on prévoit, coordonnée à une information (S) pour un réglage pas à pas des éléments d'impression (DEL), une deuxième information (M) qui contient, en un mot code, des indications, destinées à l'électronique (DE) de l'imprimante, pour l'exécution à plusieurs reprises de changements de coordonnées, pas à pas, qui se suivent.

4. Procédé selon la revendication 1, caractérisé en ce que l'on prévoit, coordonnée à une information (S) pour un réglage pas à pas des éléments d'impression (DEL), une troisième information (U), présentant au moins deux mots code, le premier mot code (U1) étant interprété dans l'électronique (DE) de l'imprimante en vue de l'exécution d'un réglage supplémentaire des éléments d'impression (DEL), consistant en un décalage, selon une des coordonnées (x) de la matrice à caractères (ZM), d'une coordonnée différentielle déterminée (par exemple, $\Delta$x = +4), et le deuxième mot code (U2) étant interprété en vue de l'achèvement du réglage décalé.

5. Procédé selon la revendication 1, caractérisé en ce que l'information (E) pour terminer le caractère à représenter est mémorisée dans l'information pour un réglage par saut des éléments d'impression (DEL) en deux mots code successifs (E1, E2) et qu'une impression de caractère est supprimée dans le cas d'un tel réglage des éléments d'impression (DEL).

6. Procédé selon la revendication 5, caractérisé en ce que la caractérisation de l'information pour un réglage par saut (SP) et pour un réglage terminal (E) des éléments d'impression (DEL) est contenue dans le premier mot code (SPY, RY) sous forme d'un profil binaire déterminé (101).

7. Procédé selon les revendications 5 et 6, caractérisé en ce que la caractérisation de l'information pour un réglage par saut (SP) et pour un réglage terminal (E) des éléments d'impression (DEL) est contenue dans le premier (SPY, EY) et dans le deuxième mot code (SPX, EX), sous forme d'un profil binaire déterminé (101 dans SPY, EY) et d'un bit déterminé (0 dans SPY, EX), et que, dans ce cas, la grandeur du saut dans la direction déterminée par le deuxième mot code (SPX, EX) est limitée.

# FIG 1

# FIG 2

n=28

ZM

# FIG 3

| BYTE NR. | CODEWORT | ΔY | ΔX | M | Y | X | |
|---|---|---|---|---|---|---|---|
| | | | | | 28 | 1 | ANFANGSKOORD. |
| 1 | 1 0 1 0 0 1 0 1 | 23 | – | | | | SP1 |
| 2 | 1 0 0 1 0 0 0 1 | – | +17 | | 23 | 17 | |
| 3 | 0 0 0 0 1 1 1 1 | 0 | +7 | | 23 | 24 | S1 |
| 4 | 1 0 1 0 0 1 0 1 | 23 | – | | | | SP2 |
| 5 | 1 0 0 0 1 0 0 0 | – | +8 | | 23 | 32 | |
| 6 | 1 1 0 0 0 1 1 1 | +1 | –7 | | 22 | 25 | S2 |
| 7 | 1 1 0 0 1 0 0 1 | +1 | +1 | | 21 | 26 | S3 |
| 8 | 1 1 0 0 1 0 1 0 | +1 | +2 | | 20 | 28 | S4 |
| 9 | 1 1 1 0 1 0 0 1 | +1 | +1 | 3 | 17 | 31 | S5 |
| 10 | 1 1 0 0 1 0 1 0 | +1 | +2 | | 16 | 33 | S6 |
| 11 | 1 1 1 0 1 0 0 1 | +1 | +1 | 3 | 13 | 36 | S7 |
| 12 | 1 1 0 0 1 0 1 0 | +1 | +2 | | 12 | 38 | S8 |
| ⋮ | ⋮ | ⋮ | ⋮ | ⋮ | ⋮ | ⋮ | ⋮ |
| 18 | 0 1 0 0 1 0 1 0 | –1 | +2 | | 9 | 60 | S14 |
| 19 | 0 1 1 0 1 0 0 1 | –1 | +3 | 3 | 12 | 63 | S15 |
| 20 | 0 1 0 0 1 0 1 0 | –1 | +2 | | 13 | 65 | S16 |
| 21 | | –1 | +1 | 3 | 16 | 68 | S17 |
| 22 | | –1 | +2 | | 17 | 70 | S18 |
| 23 | | –1 | +1 | 3 | 20 | 73 | S19 |
| 24 | | –1 | +2 | | 21 | 75 | S20 |
| 25 | 0 1 0 1 1 0 0 1 | –1 | +1 | 2 | 23 | 77 | S21 |
| 26 | 0 0 0 0 1 1 1 1 | 0 | +7 | | 23 | 84 | S22 |
| 27 | 1 0 1 0 0 1 0 1 | 23 | – | | | | SP3 |
| 28 | 0 0 0 0 1 1 1 1 | – | –15 | | 23 | 69 | |
| 29 | 1 0 1 0 1 0 1 0 | 18 | – | | | | SP4 |
| 30 | 1 0 1 0 0 0 0 0 | – | –32 | | 18 | 37 | |
| 31 | 0 0 1 1 1 1 1 1 | 0 | +7 | 4 | 18 | 65 | S23 |
| 32 | 1 0 1 1 1 1 1 1 | 28 | – | | | | |
| 33 | 1 0 1 0 0 1 0 1 | – | +37 | | 28 | 102 | E(ENDKOORD) |

11

FIG 4